# EUROPÄISCHE PATENTSCHRIFT

(11) **EP 1 247 673 B1**
(45) Veröffentlichungstag und Bekanntmachung des Hinweises auf die Patenterteilung: **15.11.2006**
(21) Anmeldenummer: 02007567.7
(22) Anmeldetag: 03.04.2002
(51) Int. Cl.: B60J 7/043

(54) **Verstellvorrichtung für einen Deckel eines Schiebehebedaches**
Adjusting device for a panel of a sliding roof
Dispositif d'ajustage pour un panneau d'un toit coulissant

(30) Priorität: 03.04.2001 DE 10116620
(43) Veröffentlichungstag der Anmeldung: 09.10.2002
(73) Patentinhaber: Webasto Vehicle Systems International GmbH, 82131 Stockdorf (DE)
(72) Erfinder: Kralik, Martin, 82362 Weilheim (DE)
(74) Vertreter: Konnerth, Dieter Hans

(56) Entgegenhaltungen:
- EP-A- 0 657 316
- DE-A- 3 517 636
- DE-A- 3 715 268
- FR-A- 2 525 159
- US-A- 4 688 848
- US-A- 4 779 920
- US-A- 5 765 908

## Beschreibung

Die Erfindung betrifft eine Verstellvorrichtung für einen Deckel eines Schiebehebedaches mit einem mit dem Deckel schwenkbar verbundenen Ausstellhebel, der an einer Dachlängsführung verschiebbar geführt ist.

Es ist ein derartiges außengeführtes Schiebehebedach bekannt, bei dem der Ausstellhebel in einer Dachlängsführung verschiebbar geführt ist. Die Dachlängsführung enthält einen vorderen ansteigenden und gebogenen Ausstellabschnitt, an dem der Ausstellhebel bei seiner anfänglichen translatorischen Verschiebebewegung eine der Kurvenbahn entsprechende Schwenkbewegung ausführt und dabei den Hinterrand des Deckels anhebt. Ein weiteres Verschwenken des Ausstellhebels gegenüber seiner Lagerung an der Dachlängsführung bzw. gegenüber der Dachlängsführung ist nicht ausführbar.

Aus der gattungsbildenden WO 98/14342 ist ein öffnungsfähiges Fahrzeugdach mit einer Dachöffnung bekannt geworden, bei dem ein die Dachöffnung verschließender Deckel mittels einer Ausstellvorrichtung am Deckelhinterrand ausgestellt und mittels einer im Bereich der Deckelhinterkante angreifenden Abstützvorrichtung in der ausgestellten Position abgestützt wird, während der Deckel nach hinten in die Offenstellung verschoben wird. Ein jeweiliger Ausstellhebel, der den Deckel aktiv hochschwenkt, verbleibt in seiner Stellung an einer Dachführung und kommt außer Eingriff vom Deckel, während ein jeweiliger Stützhebel der Abstützvorrichtung, der mit dem Deckel in einem Schwenkgelenk verbunden ist und beim Ausstellen des Deckels passiv um die Ausstellhöhe ausgeschwenkt wird, an einer dachfesten Führung mit dem Deckel nach hinten verschoben wird. Zum Ausstellen und zum Abstützen beim Verfahren des Deckels über die Dachfläche sind somit zwei Vorrichtungen erforderlich.

Aus der DE 43 43 661 C1 ist eine Verstelleinrichtung für einen Deckel eines Fahrzeug-Schiebehebedaches bekannt geworden, bei der ein Ausstellhebel an seinem einen Ende an einem verschiebbaren Antriebsschlitten schwenkbar gelagert ist und an seinem anderen Ende mit einem Steuerteil, das an dem Deckel angebracht ist, in schwenkbaren Eingriff gebracht werden kann. Der schwenkbare und spielfreie Eingriff wird durch eine Drehfalle am Ausstellhebel gebildet.

Aufgabe der Erfindung ist es, eine eingangs genannte Verstellvorrichtung zu schaffen, die gegenüber herkömmlichen Konstruktionen verbessert ist und einen nach hinten erweiterten Verschiebeweg des Deckels ermöglicht.

Diese Aufgabe wird bei der oben genannten Verstellvorrichtung erfindungsgemäß dadurch gelöst, daß zum Ausstellen des Deckels ein Schwenklagerteil des Ausstellhebels in einer Schwenkposition an der Dachlängsführung gegen Verschieben gesperrt ist, während der Ausstellhebel verschwenkt wird, und daß, sobald der verschwenkende Ausstellhebel eine Ausstellposition erreicht hat, das Schwenklagerteil zum Verschieben des Ausstellhebels entlang der Dachlängsführung freigegeben ist. Diese Verstellvorrichtung ermöglicht somit ein anfängliches Verschwenken des Ausstellhebels um seine an der Dachlängsführung vorübergehend gegen Verschieben festgelegte Lagerung. Damit kann der Ausstellhebel vergleichsweise weit in rückwärtiger Richtung gegenüber seiner Lagerung verschwenkt werden, so daß die Gelenkverbindung des Ausstellhebels mit dem Deckel in der größten zurückgefahrenen Öffnungsstellung des Deckels am hinteren Ende der Dachlängsführung über dieses hintere Ende hinaussteht. Somit kann eine größere Dachöffnung bei ansonsten gleicher Länge der Dachlängsführung freigelegt werden. Der definierte Übergang zwischen dem Verschwenken und dem Verschieben des Ausstellhebels gestattet eine spielfreie Lagerung des Ausstellhebels und damit des Hinterrandes des Deckels bei dessen Ausstellen und Absenken und insbesondere auch in Lüftungsstellungen, die mit unterschiedlichen Schwenkstellungen des Ausstellhebels einstellbar sind. Wenn der Ausstellhebel gegen Verschieben vorübergehend festgelegt ist, so ist jedoch diese Festlegung derart zu verstehen, daß eine geringfügige Verschiebung bei einer geführten Schwenkbewegung des Ausstellhebels zulässig sein kann.

Vorteilhafte Ausgestaltungen der Erfindung sind in den Unteransprüchen angegeben.

Vorzugsweise erfolgt das Ausschwenken und Verschieben des am Hinterrand des Deckels angeordneten Ausstellhebels durch den von einer Antriebseinrichtung insbesondere über eine vordere Lagereinrichtung bewegten Deckel. Der Ausstellhebel benötigt somit keinen eigenen Antrieb, sondern wird durch die Bewegung des Deckels und die entsprechende Gestaltung einer Kulisse der Dachlängsführung zwangsweise bewegt und verschwenkt.

Für die Steuerung des Bewegungsablaufs des Ausstellhebels ist es besonders vorteilhaft, wenn ein Steuerteil des Ausstellhebels beim Ausschwenken des Ausstellhebels in eine Freigabeposition bewegt wird, in der das Schwenklagerteil aus seiner Sperrstellung mit dem Ausstellhebel entlang der Dachlängsführung verschiebbar ist. Diese definierte Freigabeposition ist gleichfalls die Position, aus der beim Schließen des Deckels nach dem translatorischen Festlegen des Schwenklagerteils des Ausstellhebels an der Dachlängsführung das Verschwenken des Ausstellhebels eingeleitet wird.

Zweckmäßigerweise ist das Steuerteil in einem Schwenkabschnitt vor dem Erreichen der Freigabeposition in einer Kulissenbahn oder Steuerkurve geführt, wodurch eine zusätzliche Abstützung des Ausstellhebels und damit der Hinterkante des Deckels gebildet ist.

Bevorzugt enthält das Schwenklagerteil eine Drehfalle, die in Abhängigkeit von ihrer Drehstellung zu einer angrenzenden Kulissenbahn der Dachlängsführung drehbar oder verschiebbar ist. Die Drehfalls enthält beispielsweise eine Steuerscheibe mit einer Steuerabflachung, die zum steuernden Eingriff mit einer zumindest eine Steuerkurve enthaltenden Kulissenbahn vorgesehen ist.

Gemäß einer bevorzugten Ausführungsform weist das Schwenklagerteil zwei axial benachbarte Steuereinrichtungen auf, die in zugeordneten Kulissenführungen der Dachlängsführung aufgenommen und im Zusammenwirken mit Führungsbahnabschnitten der Kulissenführungen das Schwenken bzw. das Verschieben des Ausstellhebels steuern. Die Steuereinrichtungen können jedoch auch zu einer Steuereinrichtung zusammengefaßt werden oder in mehr als zwei Steuereinrichtungen aufgeteilt sein.

Gemäß einer bevorzugten Ausgestaltung ist eine Zuziehhilfe vorgesehen, die beim Schließen des Deckels den Ausstellhebel in seine herabgeschwenkte Schließstellung drückt. Die Zuziehhilfe bzw. der Ausstellhebel enthält beispielsweise zumindest ein Schließelement, das beim Schließen des Deckels an einer Führungsbahn in eine Schließstellung bewegt wird, wobei das Schwenklagerteil in einem Ausgleichsbahnabschnitt der Dachlängsführung bzw. der Kulissenbahn verschiebbar ist. Durch die Zuziehhilfe wird der Deckel in seiner Schließstellung an seiner Hinterkante an einer im wesentlichen vertikalen Bewegung gehindert.

In einer einfachen Gestaltung ist vorgesehen, daß die Kulissenbahn für das Schwenklagerteil das vom Schwenklagerteil beabstandete Steuerteil des Ausstellhebels bei dessen Ausschwenken aufnimmt und beim Verschieben führt. Damit ist eine Kulissenbahn für die Führung des ausgestellten Ausstellhebels ausreichend. Jedoch kann das Steuerteil auch in einer eigenen Kulissenbahn geführt sein.

Zweckmäßigerweise ist jeder Ausstellhebel zwischen der Schließstellung und der Ausschwenkstellung um mehr als etwa 90° und insbesondere um etwa 115° verschwenkbar.

Nachfolgend wird die Verstellvorrichtung anhand von Ausführungsbeispielen unter Bezugnahme auf die Zeichnungen näher erläutert. Es zeigt:
- Fig. 1: in Draufsicht in schematischer Darstellung ein Fahrzeugdach mit einem außengeführten verschiebbaren Deckel eines Schiebehebedaches in Schließstellung;
- Fig. 2: in einer Seitenansicht in schematischer Darstellung einen Ausstellhebel eines ersten Ausführungsbeispiels am Hinterrand des Deckels in Schließstellung des Deckels;
- Fig. 3: in einer Seitenansicht den Ausstellhebel in einer Schwenkstellung mit angehobenem Hinterrand des Deckels;
- Fig. 4: in einer Seitenansicht den Ausstellhebel beim Verschieben des angehobenen Deckels;
- Fig. 5: in einer Seitenansicht in vergrößerter Darstellung ein Schwenklagerteil des Ausstellhebels in seiner Kulissenführung in Schließstellung des Deckels;
- Fig. 6: in einer Seitenansicht in vergrößerter Darstellung das Schwenklagerteil in einer Schwenkposition des Ausstellhebels;
- Fig. 7: in einer Seitenansicht in vergrößerter Darstellung das in der Schwenkposition verschwenkte Schwenklagerteil;
- Fig. 8: in einer perspektivischen Explosionsdarstellung ein weiteres Ausführungsbeispiel des Ausstellhebels und der Kulissenführung;
- Fig. 9: in einer perspektivischen Ansicht einen Ausstellhebel eines dritten Ausführungsbeispiels der erfindungsgemäßen Verstellvorrichtung;
- Fig. 10: in einer Querschnittansicht den an einer Führungsschiene in Lüfterstellung in etwa gemäß Fig. 15 ausgestellten Ausstellhebel des dritten Ausführungsbeispiels mit einer Führungsschiene;
- Fig. 11: in einer perspektivischen Ansicht einen Vorderabschnitt der Führungsschiene;
- Fig. 12: in einer perspektivischen Ansicht gemäß Fig. 11 die Führungsschiene mit daran gelagertem Ausstellhebel und geöffnetem Deckel;
- Fig. 13 bis 17: in einer Schnittansicht durch eine äußere Kulissenführung der Führungsschiene und zugeordneter Teile des Ausstellhebels die erfindungsgemäße Vorrichtung in unterschiedlichen Stellungen des Deckels und des Ausstellhebels;
- Fig. 18 bis 20: in einer Schnittansicht durch eine mittlerer Kulissenführung der Führungsschiene und zugeordneter Teile des Ausstellhebels die erfindungsgemäße Vorrichtung in unterschiedlichen Stellungen;
- Fig. 21 bis 24: in einer Schnittansicht durch eine innere Kulissenführung der Führungsschiene und zugeordneter Teile des Ausstellhebels die erfindungsgemäße Vorrichtung in unterschiedlichen Stellungen;
- Fig. 25: in einer perspektivischen Ansicht eine abgewandelte Ausführungsform des Ausstellhebel; und
- Fig. 26: in einer Querschnittansicht den an einer Führungsschiene in Lüfterstellung in etwa gemäß Fig. 15 ausgestellten Ausstellhebel der Fig. 26.

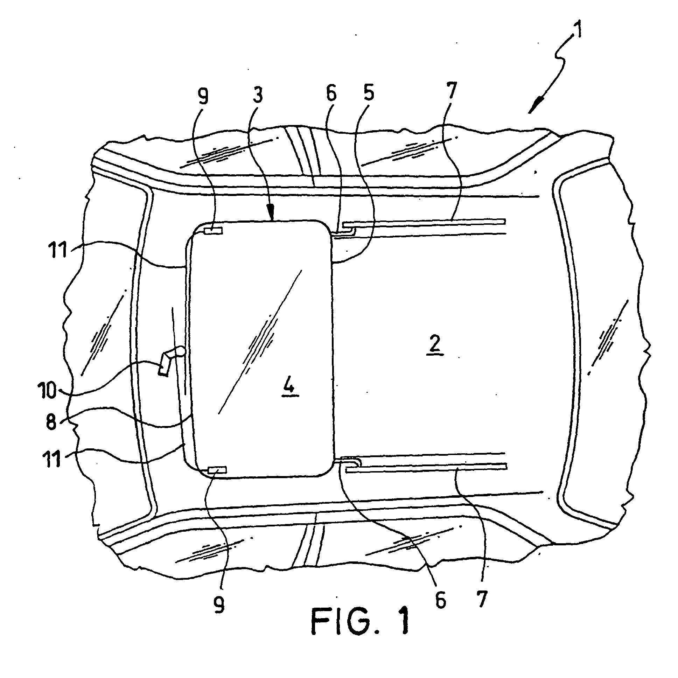

Ein Kraftfahrzeug 1 weist ein Fahrzeugdach 2 mit einem Schiebehebedach 3 auf (siehe Fig. 1), dessen Deckel 4 im Bereich seines Hinterrandes 5 über zwei Ausstellhebel 6 in zwei Führungsschienen 7 einer Dachlängsführung zum Freilegen einer Dachöffnung nach hinten über das feste Fahrzeugdach 2 verschiebbar ist. Im Bereich seines Vorderrandes 8 ist der Deckel 4 über zwei Gleitelemente oder Schlitten 9 (schematisch dargestellt) an nicht dargestellten Längsführungen verschiebbar gelagert und von einem Antriebsmotor 10 einer Antriebseinrichtung über zwei mit den Schlitten 9 oder dem Deckelvorderrand 8 verbundene Antriebskabel 11 bewegbar. Die beiden Führungsschienen 7 sind an den beiden seitlichen Rändern des Fahrzeugdaches 2 gegenüberliegend angeordnet und nach oben hin geöffnet, so daß der Deckel 4 mit den Ausstellhebeln 6 in ihrer nach oben ausgestellten Stellung nach hinten verschiebbar ist. Ein derartiges Dach wird als außengeführtes Schiebehebedach bezeichnet.

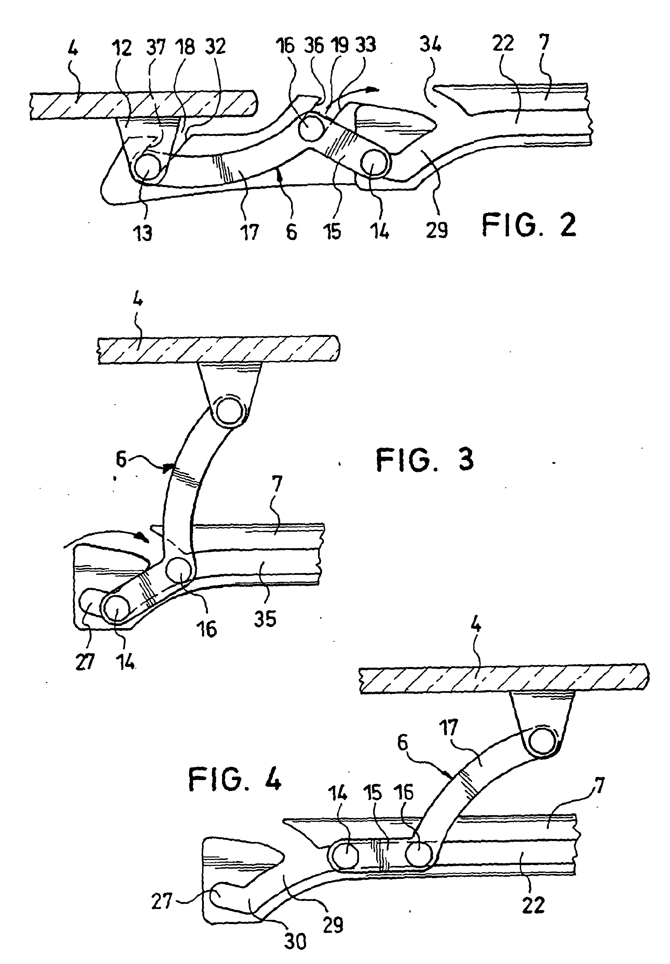

Jeder Ausstellhebel 6 ist einerseits mit einem Dachlagerteil 12 (siehe Fig. 2), das an der Unterseite des Deckels 4 nach unten absteht, um eine Querachse, die beispielsweise von einem Lagerbolzen 13 gebildet ist, schwenkbar verbunden. An seinem in Schließstellung des Deckels 4 (in Fig. 2 dargestellt) hinteren Ende ist der Ausstellhebel 6 mit einem Schwenklagerteil 14 an der Führungsschiene 7 schwenkbar und verschiebbar gelagert. Der Ausstellhebel 6 ist abgewinkelt gebildet und enthält einen hinteren kurzen Schenkel 15, der sich vom Schwenklagerteil 14 bis zu einem Steuerteil 16 erstreckt, und einen vorderen langen Schenkel 17, der sich vom Steuerteil 16 gegenüber dem kurzen Schenkel 15 abgewinkelt bis zum vorderen Ende des Ausstellhebels 6 erstreckt, das an dem Deckel 4 mittels des Lagerbolzens 13 angelenkt ist. Der Lagerbolzen 13 ist in Deckelschließstellung in einer vorderen fahrzeugfesten Kulisse 18 aufgenommen, während das Steuerteil 16, das z. B. als Bolzen gebildet ist, in einer mittleren fahrzeugfesten Kulisse 19 aufgenommen ist.

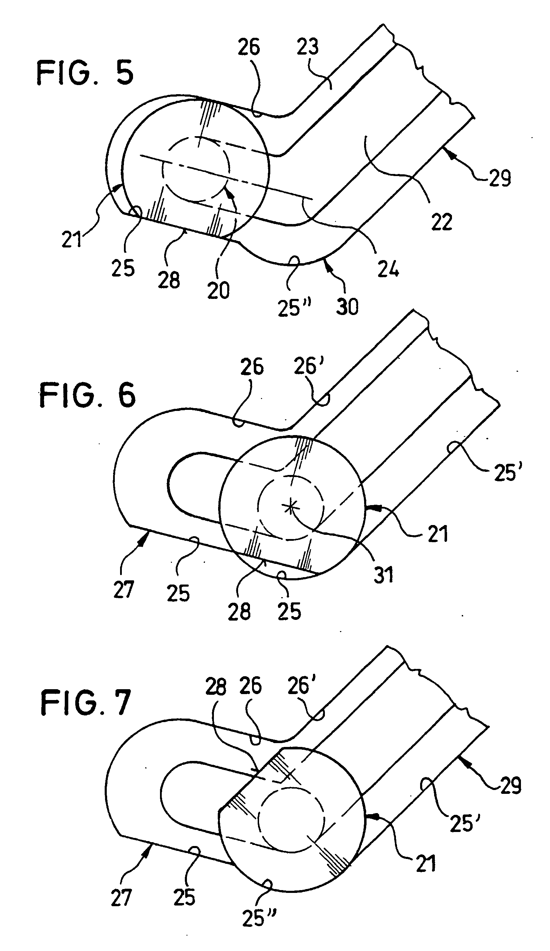

Das Schwenklagerteil 14 des Ausstellhebels 6 ist als eine Drehfalle gebildet, die im Zusammenwirken mit der Führungsschiene 7 ein Verschwenken des Ausstellhebels 6 in Abhängigkeit von ihrer jeweiligen Position an der Führungsschiene 7 zuläßt oder verhindert. Zu diesem Zweck enthält das Schwenklagerteil 14 eine abgestufte Lageranordnung mit einem ersten zylindrischen Lagerabschnitt 20 (siehe Fig. 5) und einem zweiten zylindrischen Lagerabschnitt in Form einer Steuerscheibe 21 mit einem gegenüber dem ersten Lagerabschnitt 20 größeren Durchmesser. Der erste zylindrische Lagerabschnitt 20 ist in einer Kulissenbahn 22 der Führungsschiene 7 verschiebbar geführt. Die Führungsschiene 7 enthält für die Steuerscheibe 21 eine zweite Kulissenbahn 23 seitlich neben der ersten Kulissenbahn 22 mit zwei sich bezüglich der Mittellinie 24 der ersten Kulissenbahn 22 gegenüberliegenden Steuerkanten 25 und 26.

In einem Vorderabschnitt 27 der Führungsschiene 7 bzw. der beiden Kulissenbahnen 22 und 23 ist die zweite Kulissenbahn 23 asymmetrisch gebildet, indem die bezüglich der Verschieberichtung des Schwenklagerteils 14 rechte Steuerkante 25 zur Mittellinie 24 näher angeordnet ist wie die linke Steuerkante 26. Somit kann die Steuerscheibe 21, die am Umfang eine Steuerabflachung 28 aufweist, im Vorderabschnitt 27 ausschließlich in der in Fig. 5 gezeigten Drehstellung, in der die Steuerabflachung 28 an der rechten Steuerkante 25 anliegt, aufgenommen sein. Der Ausstellhebel 6 ist damit in seiner zugeordneten Schwenkstellung entlang der Mittellinie 24 bzw. der beiden Kulissenbahnen 22 und 23 lediglich verschiebbar, jedoch nicht verschwenkbar.

Auf den Vorderabschnitt 27 der Führungsschiene 7 bzw. der beiden Kulissenbahnen 22 und 23 folgt ein Mittelabschnitt 29, bei dem die zweite Kulissenbahn 23 ebenfalls asymmetrisch gebildet ist, wobei jedoch die bezüglich der nach hinten gerichteten Verschieberichtung des Schwenklagerteils 14 linke Steuerkante 26' zur Mittellinie 24 näher angeordnet ist wie die rechte Steuerkante 25'.

In einem Übergangsabschnitt 30 zwischen dem Vorderabschnitt 27 und dem Mittelabschnitt 29 folgt die rechte Steuerkante 25" einer Kreisbahn, deren Durchmesser dem der Steuerscheibe 21 entspricht, so daß die Steuerscheibe 21 und damit das Schwenklagerteil 14 im Übergangsabschnitt 30 um seine zentrale Achse 31 verschwenkbar ist.

In Schließstellung des Deckels 4 ist der Ausstellhebel 6 mit seinem Vorderende herabgeschwenkt und in etwa horizontal ausgerichtet, wobei das Schwenklagerteil 14 am Vorderende des Vorderabschnitts 27 der Führungsschiene 7 bzw. der Kulissenbahn angeordnet ist (siehe Fig. 2 und 5).

Zum Öffnen des Deckels 4 wird über den Antriebsmotor 10 und die Antriebskabel 11 eine nach hinten gerichtete Verschiebebewegung auf den Deckel 4 eingeleitet und über den Lagerbolzen 13 auf den Ausstellhebel 6 übertragen. Dabei gleiten der Lagerbolzen 13 und das Steuerteil 16 auf der jeweiligen Ausstellbahn 32 bzw. 33 ihrer Kulissen 18 bzw. 19 geringfügig aufwärts, während das Schwenklagerteil 14 im linear oder geringfügig gekrümmt verlaufenden Vorderabschnitt 27 entlang der Kulissenbahnen 22 und 23 zum Bewegungsausgleich verschoben wird. Durch die anfängliche Aufwärtsbewegung des Ausstellhebels 6 wird die Hinterkante 5 des Deckels 4 aus einer Deckeldichtung (nicht dargestellt) angehoben.

Beim Zurückschieben des Deckels 4 gelangt das Schwenklagerteil 14 in den Übergangsabschnitt 30 (siehe Fig. 6) und damit in eine Schwenkposition, in der die fortgesetzte Verschiebebewegung des Deckels 4 den Ausstellhebel 6 mit dem Schwenklagerteil 14 um die zentrale Achse 31 als Schwenkachse verschwenkt. Eine translatorische Weiterbewegung des Schwenklagerteils 14 in den Mittelabschnitt 29 ist zunächst nicht möglich, da die linke Steuerkante 26' dem Verschieben der Steuerscheibe 21 aufgrund ihrer Stellung mit dem maximalen Scheibendurchmesser entgegensteht.

Solange das Schwenklagerteil 14 in der Schwenkposition im Übergangsabschnitt 30 angeordnet ist, kann der Ausstellhebel 6 verschwenkt werden (Bewegung von Fig. 2 zu Fig. 3). Beim Verschwenken des Ausstellhebels 6 tritt das Steuerteil 16 in eine Steuerkulisse 34 ein, die bezüglich der Schwenkposition auf einer Kreisbahn verläuft. Solange sich das Steuerteil 16 in dieser Steuerkulisse 34 befindet, ist der Ausstellhebel 6 und damit der Deckel 4 fest abgestützt, so daß eine derartige Stellung bevorzugt als Hubstellung des Deckels 4 zum Lüften eingestellt ist.

Wenn der Deckel 4 weiter nach hinten verschoben wird, bewegt sich das Steuerteil 16 aus der Steuerkulisse 34 in die Kulissenbahn 22 des Schwenklagerteils 14 bzw. des ersten zylindrischen Lagerabschnitts 20. In dieser Schwenkstellung des Ausstellhebels 6 (siehe Fig. 3) ist die Steuerscheibe 21 in der in Fig. 7 dargestellten Ausrichtung, in der ihre Steuerabflachung 28 parallel zur linken Steuerkante 26' angeordnet ist und an dieser entlang gleiten kann, wenn die Steuerscheibe 21 mit dem Schwenklagerteil 14 entlang ihrer Kulissenbahnen 22 bzw. 23 am Mittelabschnitt 29 weiter bewegt werden.

Durch den anfangs ansteigenden Verlauf der Kulissenbahnen 22 und 23 am Mittelabschnitt 29 und den Übergang in den horizontalen Verlauf am Hinterabschnitt 35 wird der Ausstellhebel 6 beim Weiterverschieben entsprechend der Anhebebewegung des Schwenklagerteils 14 gegenüber dem Steuerteil 16 nach hinten verschwenkt, so daß der vordere lange Schenkel 17 über seine Lagerung am Steuerteil 16 weit nach hinten übersteht. Wenn der weiterhin über seine vorderen Schlitten 9 angetriebene Deckel 4 bis nach hinten in seine Offenstellung verschoben wird, so kann durch den rückseitigen Überstand die Dachöffnung in größerem Maße geöffnet werden.

Zum Schließen des Deckels 4 wird dieser über den Antrieb 10, 11 nach vorne gezogen, wobei der beschriebene Bewegungsablauf entgegengesetzt erfolgt. Wenn der Ausstellhebel 6 durch den nach vorne gezogenen Deckel 4 wieder in die Stellung gemäß Fig. 3 gelangt, kann das als Drehfalle wirkende Schwenklagerteil 14 aufgrund der Breite der Steuerscheibe 21 in dieser Stellung (siehe Fig. 7) zunächst nicht in den Vorderabschnitt 27 eintreten, so daß zwangsweise vorab ein Verschwenken des Ausstellhebels 6 erfolgt, bis die Steuerabflachung 28 parallel zur rechten Steuerkante 25 angeordnet ist und in ihre Kulissenbahn 23 im Vorderabschnitt 27 eintreten kann. Bei diesem Verschwenken des Ausstellhebels 6 tritt das Steuerteile 16 zunächst wieder in die Steuerkulisse 34 ein und bietet hierin eine zusätzliche Führung.

Um über die nach vorne gerichtete Zug- und Schließbewegung des Deckels 4 eine abwärts gerichtete Schließkraft an der Hinterkante 5 des Deckels 4 zu erzeugen, die eine ausreichende Größe zum Überwinden des Widerstandes der Deckeldichtung aufweist, werden das Steuerteil 16 und der Lagerbolzen 13 gegen vordere geneigte Schließflächen 36 bzw. 37 ihrer Kulissen 19 bzw. 18 gedrückt, die die erforderliche vertikale Kraftkomponente im wesentlichen erzeugen. Das Schwenklagerteil 14 kann dabei im Vorderabschnitt 27 die erforderliche Ausgleichsbewegung bis an das Vorderende der Führungsschiene 7 bzw. der Kulissenbahn 22 ausführen.

In einer alternativen Ausführungsform kann auf eine oder auf beide Ausstellbahnen 32 und 33 verzichtet werden, wenn durch entsprechende Anordnung der Schwenkachsen die Verschiebung des Deckels 4 das zwangsweise Ausschwenken des Ausstellhebels 6 bewirkt, solange er sich mit seinem Schwenklagerteil 14 im Übergangsabschnitt 30 in seiner Schwenkposition befindet.

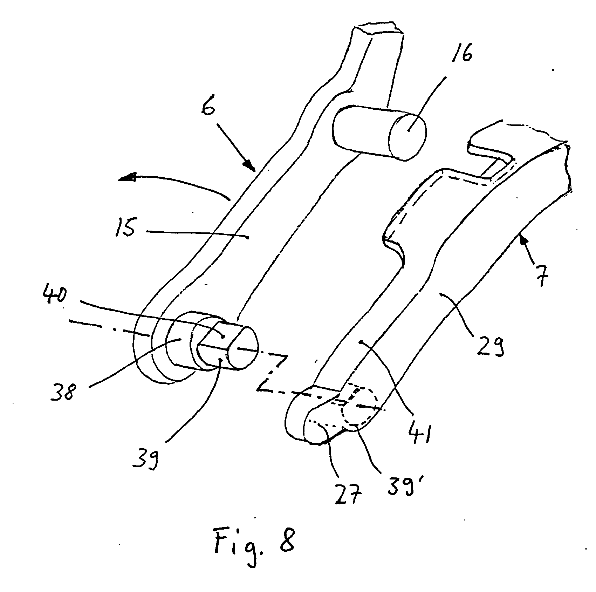

Bei dem in Fig. 8 teilweise dargestellten Ausstellhebel 6 eines weiteren Ausführungsbeispiels ist die Drehfalle von einem zylindrischen ersten Lagerzapfen 38 am Ausstellhebel 6 und einem davon vorstehenden zweiten zylindrischen Lagerzapfen 39 mit reduziertem Durchmesser und einer Steuerabflachung 40 am Umfang gebildet. Der Mittelabschnitt 29 der Führungsschiene 7 enthält einen Steuerbereich 41 für den zweiten Lagerzapfen 39, dessen Breite auf die reduzierte Dicke des zweiten Lagerzapfens 39 an seiner Steuerabflachung 40 angepaßt ist und der nur die der voranstehenden Beschreibung entsprechenden Schwenkbewegungen des Ausstellhebels 6 zuläßt, wenn der Lagerzapfen 39 in der mit unterbrochener Linie 39' dargestellten Schwenkstellung angeordnet ist, aus der der mit dem Ausstellhebel 6 verschwenkte Lagerzapfen 39 nach vorne in den Vorderabschnitt 27 eingeschoben werden kann. Dabei ist die Steuerabflachung 40 an der Unterseite angeordnet und mit der unteren Gegenfläche des Vorderabschnitts 27 in Berührung.

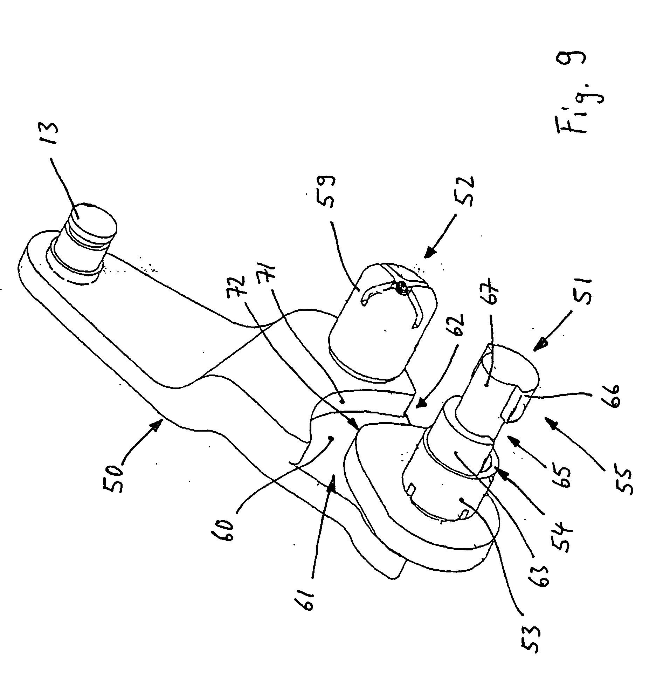

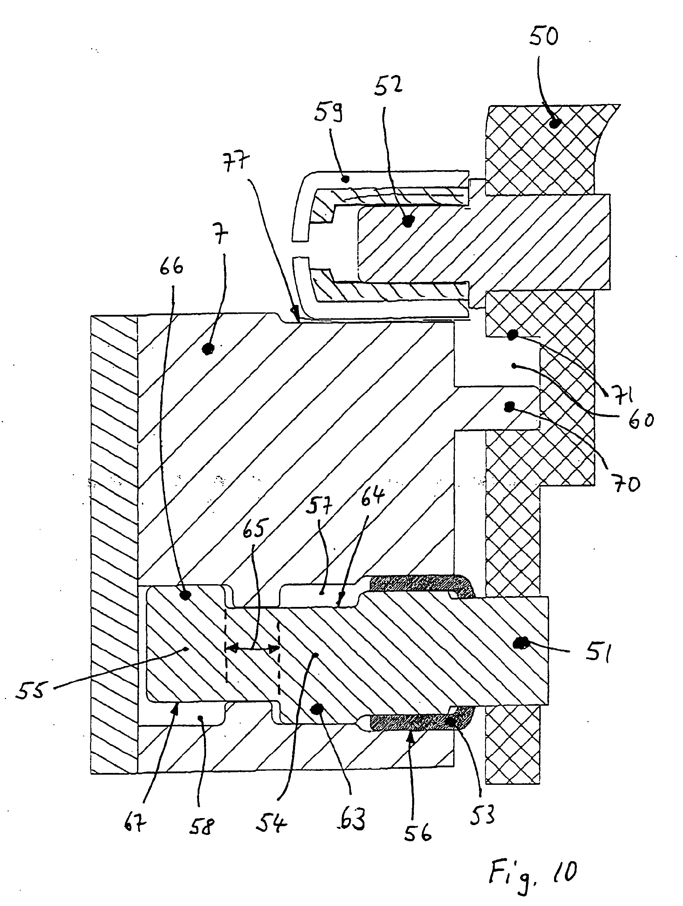

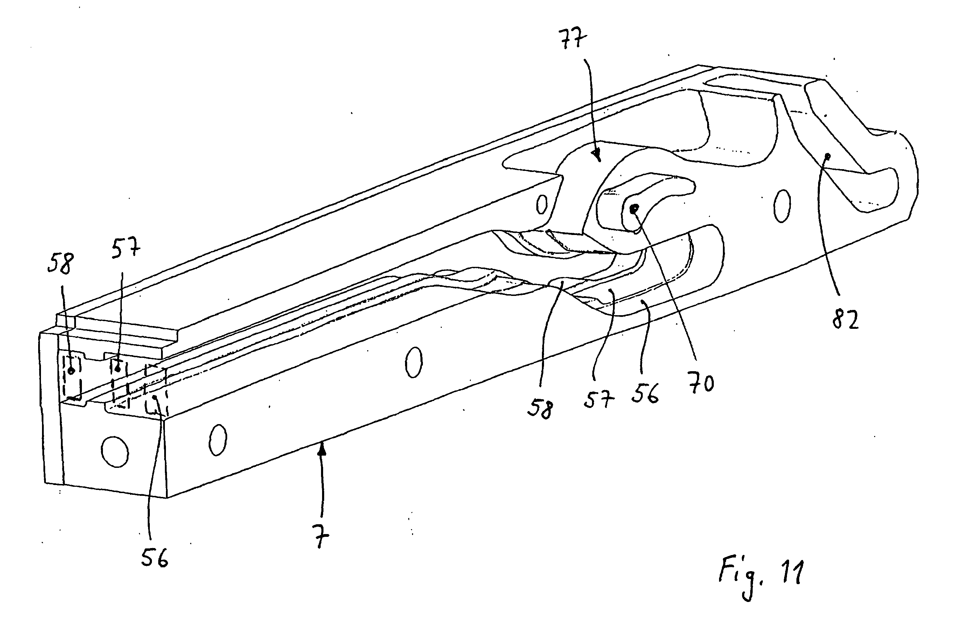

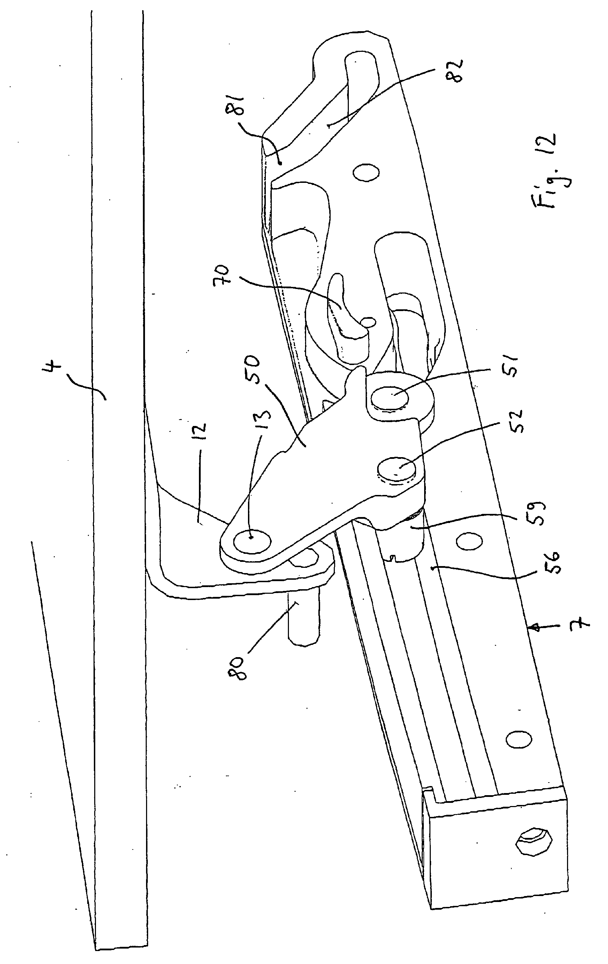

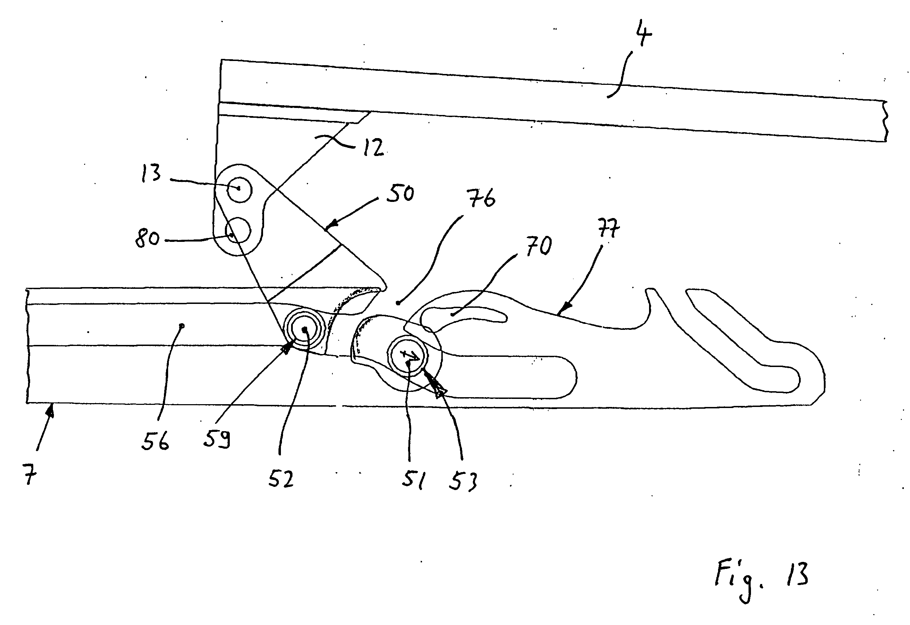

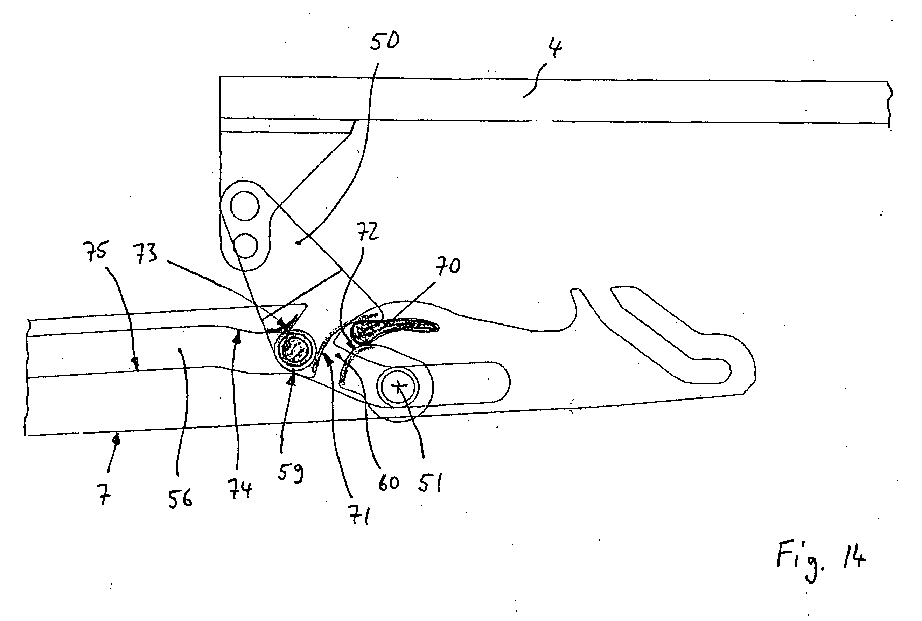

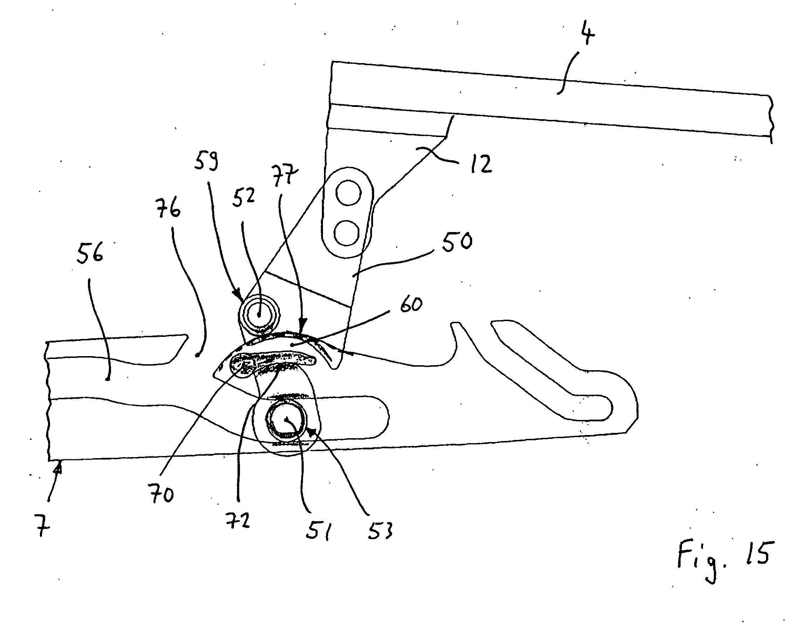

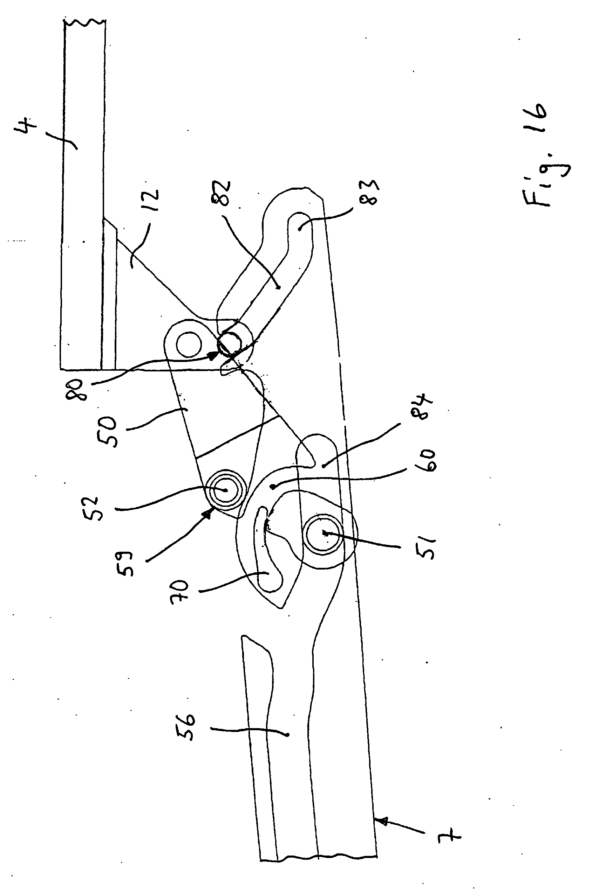

Bei einer abgewandelten Ausführungsform der erfindungsgemäßen Verstellvorrichtung (siehe Fig. 9 bis 24) enthält der Ausstellhebel 50 ein seitlich hervorstehendes Schwenklagerteil 51 und ein seitlich hervorstehendes Steuerteil 52 sowie den Lagerbolzen 13, der an dem Deckellagerteil 12 schwenkbar gelagert ist. Das Schwenklagerteil 51 enthält eine Gleitkappe 53 benachbart zum Ausstellhebel 50, einen sich anschließenden zweiten Schlüsselbereich 54 und schließlich am Außenabschnitt einen ersten Schlüsselbereich 55. Die Gleitkappe 53 ist an einer äußeren dritten Kulissenführung 56 der Führungsschiene 7, der zweite Schlüsselbereich 54 an einer zweiten, mittleren Kulissenführung 57 und der erste Schlüsselbereich 55 an einer ersten inneren Kulissenführung 58 der Führungsschiene 7 verschiebbar aufgenommen ist. Das Steuerteil 52 enthält eine Gleitkappe 59, mit der es an der Führungsschiene 7 gleiten kann.

Der Ausstellhebel 50 enthält des weiteren eine Führungskulisse 60, die zwischen dem Schwenklagerteil 51 und dem Steuerteil 52 gebildet ist, zur Seite des Schwenklagerteils 51 und des Steuerteils 52 hin geöffnet ist und eine Eintrittsöffnung 61 sowie eine Austrittsöffnung 62 aufweist.

Der zweite Schlüsselbereich 54 enthält zwei Halbzylinderflächen 63 und 64, die unterschiedliche Durchmesser aufweisen. Die erste Halbzylinderfläche 63 weist einen größeren Durchmesser auf wie die zweite Halbzylinderfläche 64, die der ersten Halbzylinderfläche 63 gegenüber liegt. Der erste Schlüsselbereich 55 ist vom zweiten Schlüsselbereich 54 um einen Abstand 65 beabstandet und enthält ebenfalls eine erste Halbzylinderfläche 66 mit dem größeren Durchmesser und eine zweite Halbzylinderfläche 67 mit den kleineren Durchmesser der jeweiligen Halbzylinderflächen 63, 64 des zweiten Schlüsselbereichs 54, jedoch sind die Halbzylinderflächen 66 und 67 gegenüber denjenigen des zweiten Schlüsselbereichs 54 um 180° in Umfangsrichtung versetzt angeordnet. Der jeweils größere Durchmesser ist geringfügig kleiner wie der Durchmesser der Gleitkappe 53.

Der Bewegungsablauf wird bei einer nach vorne gerichteten Schließbewegung des geöffneten Deckels 4 anhand des jeweiligen Bewegungsverhaltens des Ausstellhebels und der beiden Gleitkappen des Schwenklagerteils 51 bzw. des Steuerteils 52 sowie des ersten Schlüsselbereichs 55 und des zweiten Schlüsselbereichs 54 in den zugeordneten Führungskulissen nachfolgend erläutert.

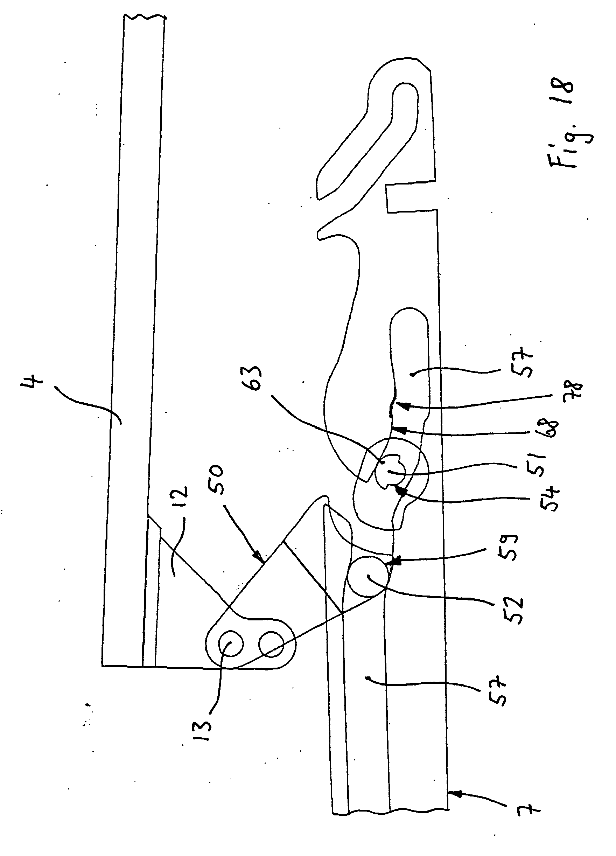

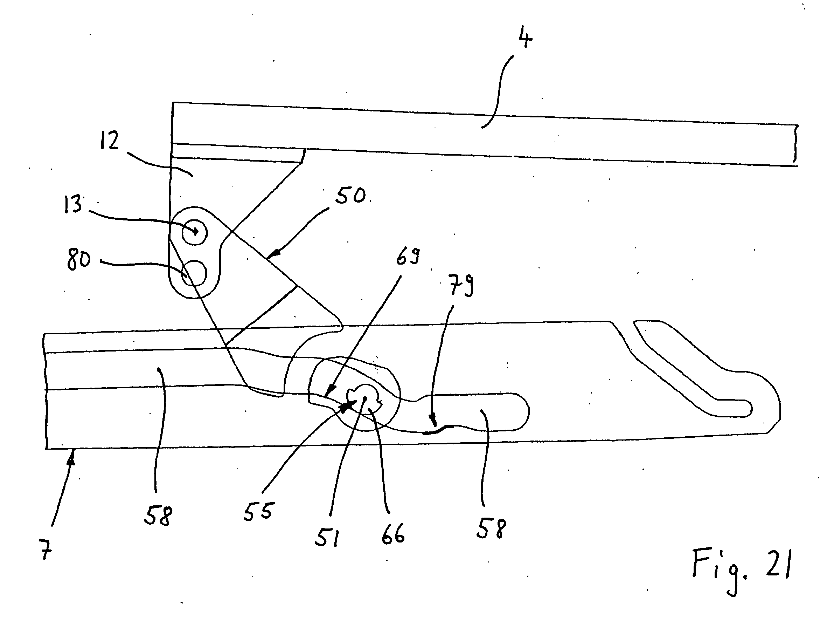

Bei ausgestelltem Deckel 4 (Fig. 13) ist der Ausstellhebel 50 durch das Schwenklagerteil 51 und das Steuerteil 52 mit den jeweiligen Gleitkappen 53 bzw. 59 an der äußeren Führungskulisse 56 spielfrei und unverschwenkbar geführt. Fig. 13 zeigt die Position des Ausstellhebels 50 in etwa 15 mm vor der Schwenkstellung. In der Ebene des zweiten Schlüsselbereichs 54 (Fig. 18) ist die Gleitkappe 59 an der mittleren Führungskulisse 57 spielfrei geführt und der zweite Schlüsselbereich 54 liegt mit seiner größeren Halbzylinderfläche 63 an der oberen Führungsbahn 68 der Führungskulisse 57 an. In der Ebene des ersten Schlüsselbereichs 55 (Fig. 21) liegt dieser mit seiner größeren Halbzylinderfläche 66 an der unteren Führungsbahn 69 der Führungskulisse 58 an.

Nachdem der Deckel 4 und damit der Ausstellhebel 50 um einen weiteren Verschiebeweg nach vorne verschoben worden sind, nimmt der Ausstellhebel 50 die Stellung ein, in der seine Schwenkbewegung um das im wesentlichen nicht weiterbewegte Schwenklagerteil 51 einsetzt (Fig. 14). Ein Steuerteil 70, das an der Führungsschiene 7 seitlich hervorsteht, tritt durch die Eintrittsöffnung 61 in die Führungskulisse 60 des Ausstellhebels 50 ein und kommt mit der Außenfläche 71 und der Innenfläche 72 der Führungskulisse 60 in Eingriff. Die Gleitkappe 59 wird an einer Abrundung 73 der oberen Führungsbahn 74 entlang geführt, während sie die untere Führungsbahn 75 schon verlassen hat und sich in einen Kulissenabschnitt 76 bewegt, der von der Führungskulisse 56 nach oben abzweigt und im weiteren Verlauf nur eine untere Steuerführungsbahn 77 für die Gleitkappe 59 des Steuerteils 52 aufweist.

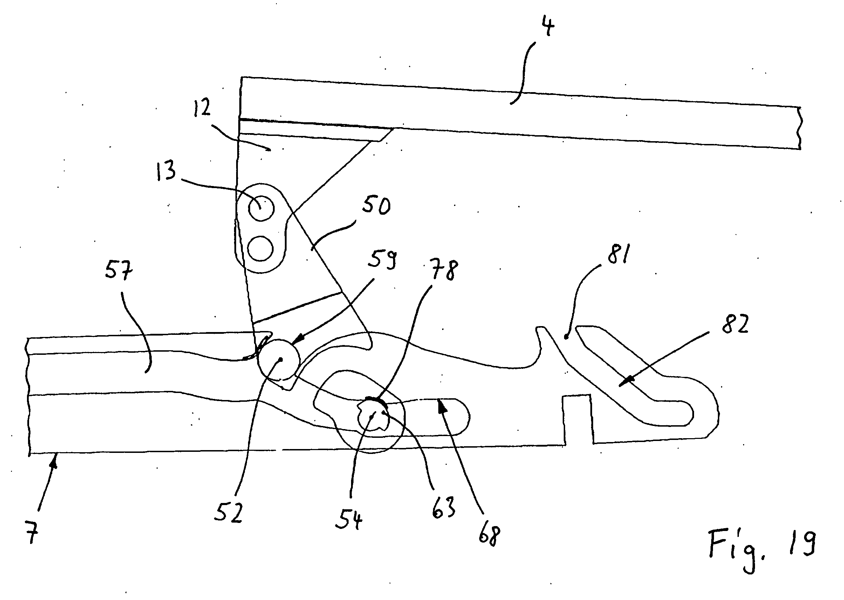

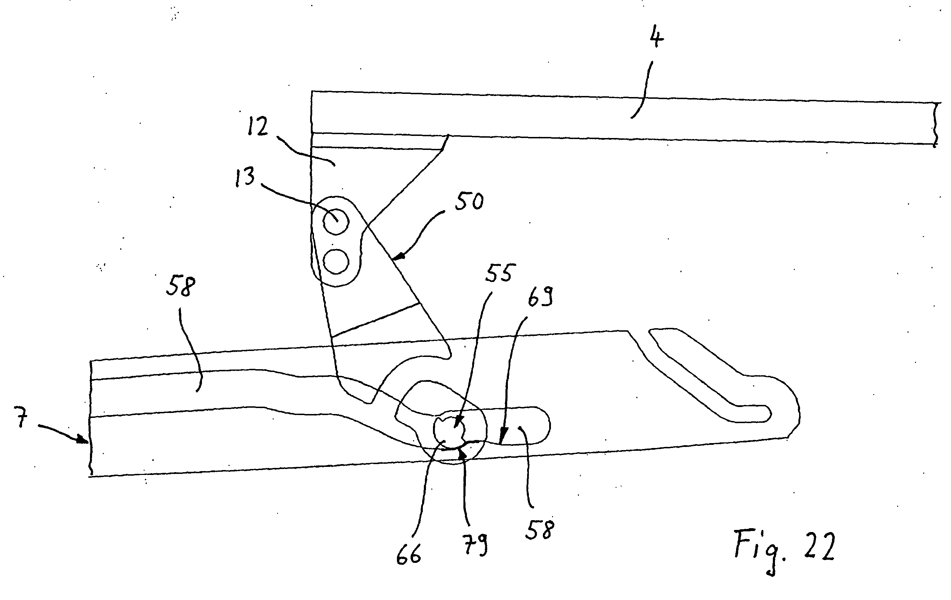

In der Darstellung der Ebene des zweiten Schlüsselbereichs 54 (Fig. 19) ist der Ausstellhebel 50 in einer gegenüber der Ansicht der Fig. 14 geringfügig weiter verschwenkten Stellung gezeigt, in der die Gleitkappe 59 in den Kulissenabschnitt 76 eingetreten ist und die größere Halbzylinderfläche 63 an einem kreisbogenförmigen Anschlag 78 der oberen Führungsbahn 68 der Führungskulisse 57 anliegt, so daß eine translatorische Bewegung des Ausstellhebels 50 bzw. des Schwenklagerteils 51 zunächst nicht möglich ist. Gleichzeitig hat sich in der Ebene des ersten Schlüsselbereichs 55 (Fig. 22) dieser mit seiner größeren Halbzylinderfläche 66 an einen kreisbogenförmigen Anschlag 79 an der unteren Führungsbahn 69 der Führungskulisse 58 angelegt, so daß auch hier eine translatorische Bewegung in dieser Schwenkstellung des Ausstellhebels 50 verhindert ist.

Der weiterbewegte Deckel 4 nimmt gemäß Fig. 15 eine Lüfterstellung ein, in der der Ausstellhebel 50 gegenüber seiner in den Fig. 19 und 22 dargestellten Stellung um das Schwenklagerteil 51 weiter verschwenkt ist. Die Gleitkappe 59 gleitet auf einem kreisbogenförmigen Abschnitt der unteren Steuerführungsbahn 77, während sich das Steuerteil 70 durch die Führungskulisse 60 des Ausstellhebels 50 erstreckt und an der Austrittsöffnung 62 austritt. Das Steuerteil 70 kann, wie in Fig. 15 dargestellt ist, mit der Innenfläche 72 der Führungskulisse 60 in Eingriff sein oder kann auch davon beabstandet sein.

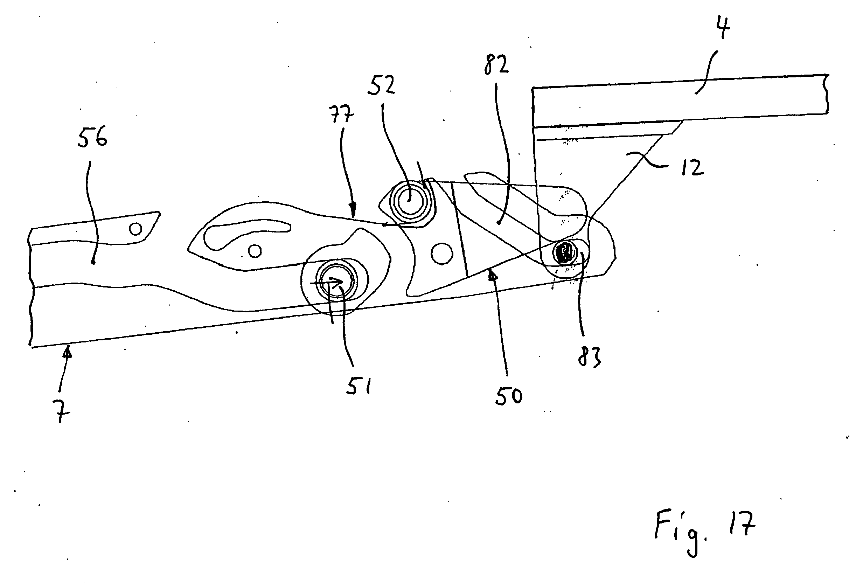

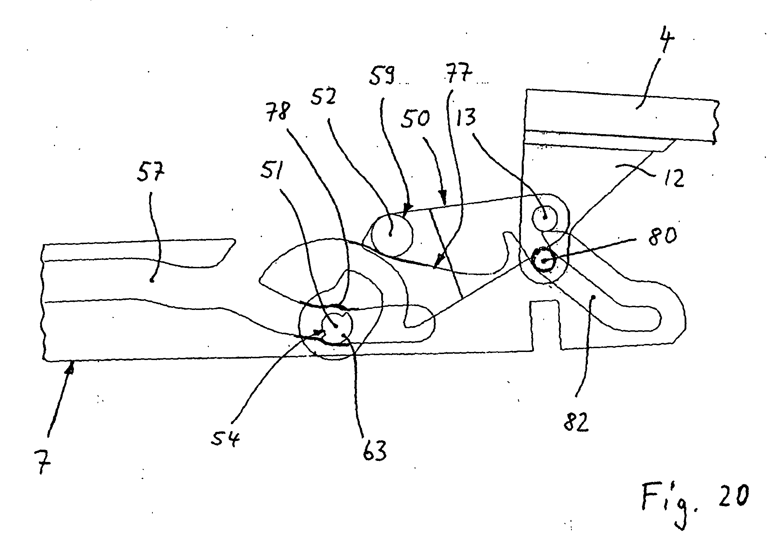

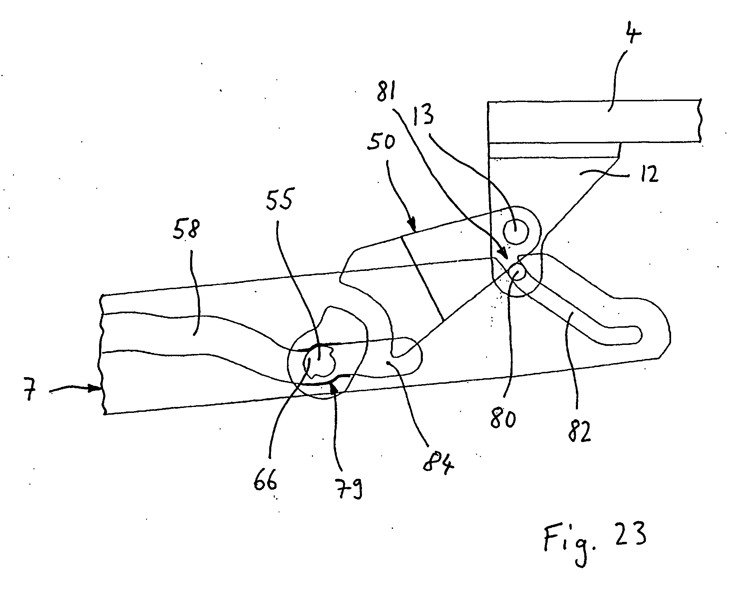

Der aus der Lüfterstellung gemäß Fig. 15 in Schließstellung nach vorne weiterbewegte Deckel 4 verschwenkt den Ausstellhebel 50 weiterhin um das translatorisch festgehaltene Schwenklagerteil 51 bis in eine Schwenk-Endstellung (siehe Fig. 16), in der ein am Dachlagerteil 12 angebrachter Schließbolzen 80 (siehe auch Fig. 12) in einen Eintrittsabschnitt 81 einer Kulissenbahn 82 eingeschwenkt ist, die am Vorderende der Führungsschiene 7 von deren Oberseite schräg abwärts nach vorne verläuft. Nach seinem Einschwenken in den Eintrittsabschnitt 81 übernimmt der Schließbolzen 80 die Führung des Ausstellhebels 50, der nun wieder translatorisch entlang der äußeren dritten Kulissenführung 56 der Führungsschiene 7 bewegt werden kann, nachdem (siehe Fig. 20) die größere Halbzylinderfläche 63 des weiter geschwenkten zweiten Schlüsselbereichs 54 des Schwenklagerteils 51 von dem kreisbogenförmigen Anschlag 78 der oberen Führungsbahn 68 der Führungskulisse 57 freigekommen ist und (siehe Fig. 23) die größere Halbzylinderfläche 66 des ersten Schlüsselbereichs 55 von dem kreisbogenförmigen Anschlag 79 an der unteren Führungsbahn 69 der Führungskulisse 58 freigekommen ist.

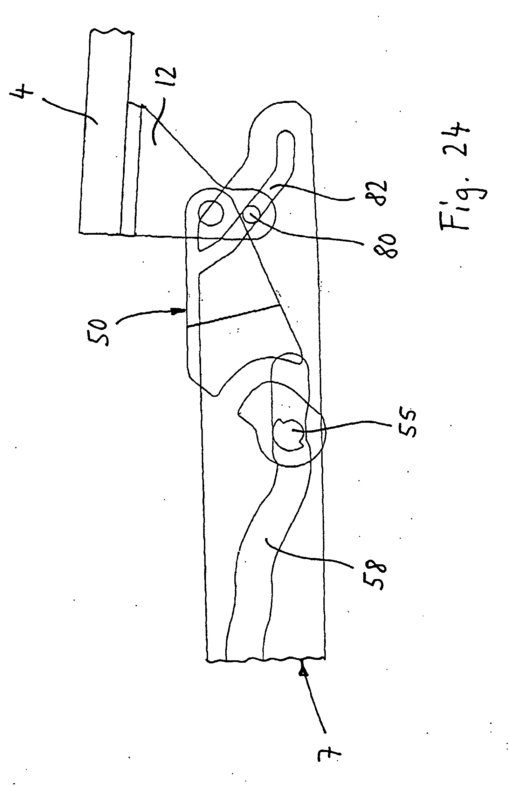

Der Schließbolzen 80 bildet mit der Kulissenbahn 82 eine Zuziehhilfe, die den weiterbewegten Deckel 4 (siehe Fig. 24) an seinem Hinterende in seine Schließstellung abwärts zieht, während er nach vorne bewegt wird und damit auch der Ausstellhebel 50 entlang der Führungsschiene 7 nach vorne bewegt wird.

In der Schließstellung des Deckels 4 (Fig. 17) ist der Schließbolzen 80 in einem horizontalen Vorderabschnitt 83 der Kulissenbahn 82 angeordnet, so daß der Deckel 4 gegen vertikale Bewegung gesichert ist. Das Schwenklagerteil 51 hat sich in einen vorderen Ausgleichsabschnitt 84 der drei Kulissenführungen 56, 57, und 58 bewegt.

Das Steuerteil 70 ist als in Bewegungsrichtung längliches Formteil dargestellt, es kann jedoch auch ein runder Bolzen oder Zapfen sein. Die Halbzylinderflächen können auch von der Zylinderform abweichen.

Beim Öffnen des Deckels 4 erfolgt der beschriebene Bewegungsablauf in entgegengesetzter Richtung.

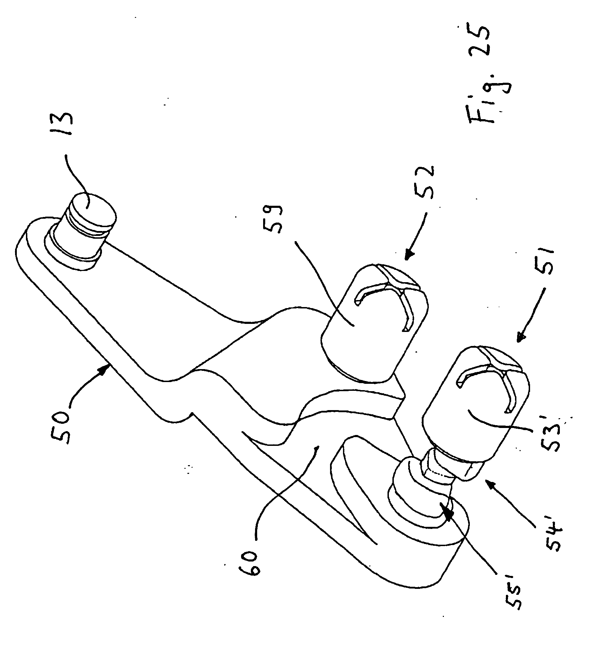

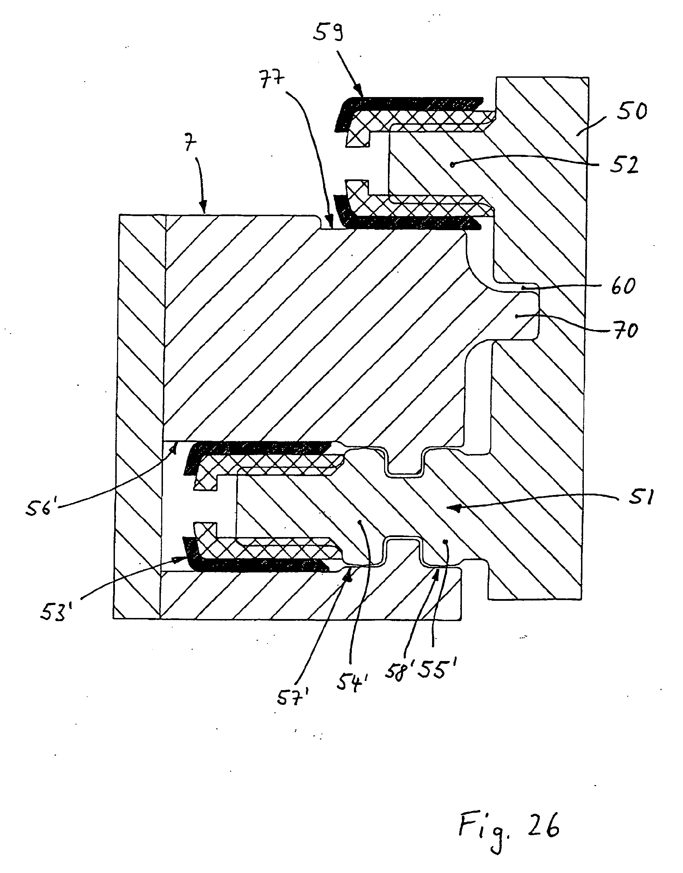

In einer abgewandelten Ausführungsform sind an dem Schwenklagerteil 51 des Ausstellhebels 50 (siehe Fig. 25 und 26) die Gleitkappe 53 sowie der erste und der zweite Schlüsselbereich 55 bzw. 54 in axial veränderter Anordnung, und zwar ist die Gleitkappe 53' am axial äußeren Ende des Schwenklagerteils 51 angeordnet, während der erste Schlüsselbereich 55' benachbart zum Ausstellhebel 50 und der zweite Schlüsselbereich 54' zwischen dem ersten Schlüsselbereich 55' und der Gleitkappe 53' angeordnet ist. Die drei zugeordneten Kulissenführungen 56', 57' und 58' sind dementsprechend in der Führungsschiene 7 angeordnet, wobei die Verläufe der Kulissenführungen 56', 57' und 58' denjenigen der beschriebenen Kulissenführungen 56, 57 und 58 entsprechen. Der Bewegungsablauf gleicht demzufolge dem anhand der Fig. 13 bis 24 beschriebenen Bewegungsablauf.

### Bezugszeichenliste

- 1: Kraftfahrzeug
- 2: Fahrzeugdach
- 3: Schiebehebedach
- 4: Deckel
- 5: Hinterrand
- 6: Ausstellhebel
- 7: Führungsschiene
- 8: Vorderrand
- 9: Schlitten
- 10: Antriebsmotor
- 11: Antriebskabel
- 12: Dachlagerteil
- 13: Lagerbolzen
- 14: Schwenklagerteil
- 15: kurzer Schenkel
- 16: Steuerteil
- 17: langer Schenkel
- 18: Kulisse
- 19: Kulisse
- 20: erster Lagerabschnitt
- 21: Steuerscheibe
- 22: erste Kulissenbahn
- 23: zweite Kulissenbahn
- 24: Mittellinie
- 25: Steuerkante
- 26: Steuerkante
- 27: Vorderabschnitt
- 28: Steuerabflachung
- 29: Mittelabschnitt
- 30: Übergangsabschnitt
- 31: Achse
- 32: Ausstellbahn
- 33: Ausstellbahn
- 34: Steuerkulisse
- 35: Hinterabschnitt
- 36: Schließfläche
- 37: Schließfläche
- 38: erster Lagerzapfen
- 39: zweiter Lagerzapfen
- 40: Steuerabflachung
- 41: Steuerbereich

- 50: Ausstellhebel
- 51: Schwenklagerteil
- 52: Steuerteil
- 53: Gleitkappe
- 54: zweiter Schlüsselbereich
- 55: erster Schlüsselbereich
- 56: dritte Kulissenführung
- 57: zweite Kulissenführung
- 58: erste Kulissenführung
- 59: Gleitkappe
- 60: Führungskulisse
- 61: Eintrittsöffnung
- 62: Austrittsöffnung
- 63: größere Halbzylinderfläche
- 64: kleinere Halbzylinderfläche
- 65: Abstand
- 66: größere Halbzylinderfläche
- 67: kleinere Halbzylinderfläche
- 68: obere Führungsbahn
- 69: untere Führungsbahn
- 70: Steuerteil
- 71: Außenfläche
- 72: Innenfläche
- 73: Abrundung
- 74: obere Führungsbahn
- 75: untere Führungsbahn
- 76: Kulissenabschnitt
- 77: untere Steuerführungsbahn
- 78: kreisbogenförmiger Anschlag
- 79: kreisbogenförmiger Anschlag
- 80: Schließbolzen
- 81: Eintrittsabschnitt
- 82: Kulissenbahn
- 83: Vorderabschnitt
- 84: Ausgleichsabschnitt

## Patentansprüche

1. Verstellvorrichtung für einen Deckel eines Schiebehebedaches mit einem mit dem Deckel schwenkbar verbundenen Ausstellhebel, der an einer Dachlängsführung verschiebbar geführt ist,
**dadurch gekennzeichnet,**
**daß** zum Ausstellen des Deckels (4) ein Schwenklagerteil (14; 51) des Ausstellhebels (6; 50) in einer Schwenkposition an der Dachlängsführung (7) gegen Verschieben gesperrt ist, während der Ausstellhebel (6; 50) verschwenkt wird, und
**daß**, sobald der verschwenkende Ausstellhebel (6; 50) eine Ausstellposition erreicht hat, das Schwenklagerteil (14; 51) zum Verschieben des Ausstellhebels (6; 50) entlang der Dachlängsführung (7) freigegeben ist.

2. Verstellvorrichtung nach Anspruch 1,
**dadurch gekennzeichnet, daß** das Verschwenken und Verschieben des Ausstellhebels (6; 50) durch den von einer Antriebseinrichtung (10, 11) bewegten Deckel (4) erfolgt.

3. Verstellvorrichtung nach Anspruch 1 oder 2,
**dadurch gekennzeichnet, daß** ein Steuerteil (16; 52) des Ausstellhebels (6; 50) beim Ausschwenken des Ausstellhebels (6; 50) in eine Freigabeposition bewegt wird, in der das Schwenklagerteil (14; 51) aus seiner Sperrstellung mit dem Ausstellhebel (6; 50) entlang der Dachlängsführung (7) verschiebbar ist.

4. Verstellvorrichtung nach einem der Ansprüche 1 bis 3,
**dadurch gekennzeichnet, daß** das Schwenklagerteil (14) eine Drehfalle enthält, die in Abhängigkeit von ihrer Drehstellung zu einer angrenzenden Kulissenbahn (27, 29) der Dachlängsführung (7) drehbar oder verschiebbar ist.

5. Verstellvorrichtung nach Anspruch 4,
**dadurch gekennzeichnet, daß** die Drehfalle eine Steuerscheibe (21) mit einer Steuerabflachung (28) zum steuernden Eingriff mit einer zumindest eine Steuerkurve (25, 26) enthaltenden Kulissenbahn (23) aufweist.

6. Verstellvorrichtung nach Anspruch 4,
**dadurch gekennzeichnet, daß** die Drehfalle einen zylindrischen Gleitzapfen (39) mit einer Steuerabflachung (40) zum steuernden Eingriff mit einer als Steuerkurve gebildeten Kulissenbahn (22) für den Gleitzapfen (39) aufweist.

7. Verstellvorrichtung nach einem der Ansprüche 1 bis 3,
**dadurch gekennzeichnet, daß** das Schwenklagerteil (51) zwei axial benachbarte Steuereinrichtungen (54, 55) aufweist, die in zugeordneten Kulissenführungen (57, 58) der Dachlängsführung (7) aufgenommen und im Zusammenwirken mit Führungsbahnabschnitten (78, 79) der Kulissenführungen (57, 58) das Schwenken bzw. das Verschieben des Ausstellhebels (50) steuern.

8. Verstellvorrichtung nach Anspruch 7,
**dadurch gekennzeichnet, daß** die erste Steuereinrichtungen (55) und die zweite Steuereinrichtungen (54) jeweils zwei sich gegenüberliegende Halbzylinderflächen (63, 64 bzw. 66, 67) mit unterschiedlichen Durchmessern aufweisen und die beiden Halbzylinderflächen (63, 66) mit dem größeren Durchmesser auf sich gegenüberliegenden Seiten an dem Schwenklagerteil (51) angeordnet sind.

9. Verstellvorrichtung nach einem der Ansprüche 1 bis 8,
**dadurch gekennzeichnet, daß** eine Zuziehhilfe (36, 37; 70, 82) vorgesehen ist, die beim Schließen des Deckels (4) den Ausstellhebel (6; 50) in seine herabgeschwenkte Schließstellung drückt.

10. Verstellvorrichtung nach einem der Ansprüche 1 bis 9,
**dadurch gekennzeichnet, daß** der Ausstellhebel (6) bzw. die Zuziehhilfe zumindest ein Schließelement (13, 16; 80) aufweist, das beim Schließen des Deckels (4) an einer Führungsbahn (36, 37; 82) in eine Schließstellung bewegt wird, wobei das Schwenklagerteil (14; 51) in einem Ausgleichsbahnabschnitt (27; 56, 57, 58) der Dachlängsführung (7) bzw. der Kulissenbahnen verschiebbar ist.

11. Verstellvorrichtung nach einem der Ansprüche 3 bis 10,
**dadurch gekennzeichnet, daß** eine Kulissenbahn (22) der Dachlängsführung (7) für das Schwenklagerteil (14) das vom Schwenklagerteil (14) beabstandete Steuerteil (16) des Ausstellhebels (6) bei dessen Ausschwenken aufnimmt und beim Verschieben führt.

12. Verstellvorrichtung nach einem der Ansprüche 1 bis 11,
**dadurch gekennzeichnet, daß** der Ausstellhebel (6; 50) zwischen der Schließstellung und der Ausschwenkstellung um mehr als etwa 90° und insbesondere um etwa 115° verschwenkbar ist.

## Claims

1. Adjusting device for a panel of a sliding roof, having a raising lever which is pivotably connected to the panel and is displaceably guided on a roof longitudinal guide
**characterized**
**in that**, in order to raise the panel (4), a pivoting bearing part (14; 51) of the raising lever (6; 50) is locked against displacement in a pivoting position on the roof longitudinal guide (7) while the raising lever (6; 50) is pivoted, and
**in that**, as soon as the pivoting raising lever (6; 50) has reached a raised position, the pivoting bearing part (14; 51) is released to displace the raising lever (6; 50) along the roof longitudinal guide (7).

2. Adjusting device according to Claim 1, **characterized in that** the raising lever (6; 50) is pivoted and displaced by the panel (4) moved by a drive device (10, 11).

3. Adjusting device according to Claim 1 or 2, **characterized in that**, as the raising lever (6; 50) is pivoted out, a control part (16; 52) of the raising lever (6; 50) is moved into a release position, in which the pivoting bearing part (14; 51) can be displaced along the roof longitudinal guide (7) out of its locking position by the raising lever (6; 50).

4. Adjusting device according to one of Claims 1 to 3, **characterized in that** the pivoting bearing part (14) contains a rotary latch which can be rotated or displaced, depending on its rotary position in relation to an adjacent slotted guide track (27, 29) of the roof longitudinal guide (7).

5. Adjusting device according to Claim 4, **characterized in that** the rotary latch contains a control disc (21) having a control flat (28), which is provided for controlling engagement with a slotted guide track (23) containing at least one cam (25, 26).

6. Adjusting device according to Claim 4, **characterized in that** the rotary latch has a cylindrical sliding pin (39) having a control flat (40) for controlling engagement with a slotted guide track (22) formed as a cam for the sliding pin (39).

7. Adjusting device according to one of Claims 1 to 3, **characterized in that** the pivoting bearing part (51) has two axially adjacent control devices (54, 55), which are accommodated in associated slotted guides (57, 58) of the roof longitudinal guide (7) and, in interaction with guide track sections (78, 79) of the slotted guides (57, 58), control the pivoting and the displacement of the raising lever (50).

8. Adjusting device according to Claim 7, **characterized in that** the first control devices (55) and the second control devices (54) in each case have two opposite semi-cylindrical surfaces (63, 64 and 66, 67, respectively) with different diameters, and the two semi-cylindrical surfaces (63, 66) having the larger diameter are arranged on opposite sides of the pivoting bearing part (51).

9. Adjusting device according to one of Claims 1 to 8, **characterized in that** a closing aid (36, 37; 70, 82) is provided which, as the panel (4) is closed, forces the raising lever (6; 50) into its pivoted-down closed position.

10. Adjusting device according to one of Claims 1 to 9, **characterized in that** the raising lever (6) or the closing aid has at least one closing element (13, 16; 80) which, as the panel (4) is closed, is moved on a guide track (36, 37; 82) into a closed position, it being possible for the pivoting bearing part (14; 51) to be displaced into a compensating section (27; 56, 57, 58) of the roof longitudinal guide (7) and the slotted guide tracks.

11. Adjusting device according to one of Claims 3 to 10, **characterized in that** a slotted guide track (22) of the roof longitudinal guide (7) for the pivoting bearing part (14) accommodates the control part (16) of the raising lever (6), spaced apart from the pivoting bearing part (14), as it is pivoted out and as it is displaced.

12. Adjusting device according to one of Claims 1 to 11, **characterized in that** the raising lever (6; 50) can be pivoted by more than about 90° and in particular by about 115° between the closed position and the pivoted-out position.

## Revendications

1. Dispositif de réglage pour un panneau d'un toit à mouvement vertical et coulissant, avec un levier de relevage qui est relié au panneau à pivotement et qui est guidé en coulissement sur une glissière longitudinale de toit,
**caractérisé en ce que**, pour relever le panneau (4), une partie (14 ; 51) formant palier de pivotement du levier de relevage (6 ; 50) est bloquée en coulissement dans une position de pivotement sur la glissière longitudinale de toit (7), tandis que le levier de relevage (6 ; 50) est pivoté,
et **en ce que**, dès que le levier de relevage pivoté (6 ; 50) a atteint une position relevée, la partie (14 ; 51) formant palier de pivotement est libérée afin de faire coulisser le levier de relevage (6 ; 50) le long de la glissière longitudinale de toit (7).

2. Dispositif de réglage selon la revendication 1, **caractérisé en ce que** le pivotement et le coulissement du levier de relevage (6 ; 50) s'effectuent par le panneau (4) déplacé par un organe d'entraînement (10, 11).

3. Dispositif de réglage selon la revendication 1 ou 2, **caractérisé en ce qu'**une partie de commande (16 ; 52) du levier de relevage (6; 50) est, lors du relevage par pivotement du levier de relevage (6 ; 50), déplacée dans une position de libération dans laquelle la partie (14 ; 51) formant palier de pivotement peut quitter sa position bloquée et être coulissée avec le levier de relevage (6; 50) le long de la glissière longitudinale de toit (7).

4. Dispositif de réglage selon l'une des revendications 1 à 3, **caractérisé en ce que** la partie (14) formant palier de pivotement comporte un loquet rotatif qui est rotatif ou coulissant en fonction de sa position de rotation par rapport à une coulisse attenante (27, 29) de la glissière longitudinale de toit (7).

5. Dispositif de réglage selon la revendication 4, **caractérisé en ce que** le loquet rotatif présente un disque de commande (21) doté d'un méplat de commande (28) pour l'engagement de commande avec une coulisse (23) contenant au moins une came de commande (25, 26).

6. Dispositif de réglage selon la revendication 4, **caractérisé en ce que** le loquet rotatif présente un tenon coulissant cylindrique (39) doté d'un méplat de commande (40) pour l'engagement de commande avec une coulisse (22) pour le tenon coulissant (39) qui est réalisée sous forme de came de commande.

7. Dispositif de réglage selon l'une des revendications 1 à 3, **caractérisé en ce que** la partie (51) formant palier de pivotement présente deux organes de commande axialement voisins (54, 55) qui sont reçus dans des guides à coulisse associés (57, 58) de la glissière longitudinale de toit (7) et qui, en coopération avec des parties (78, 79) de voie de guidage des guides à coulisse (57, 58), commandent le pivotement ou respectivement le coulissement du levier de relevage (50).

8. Dispositif de réglage selon la revendication 7, **caractérisé en ce que** les premiers organes de commande (55) et les seconds organes de commande (54) présentent respectivement deux surfaces semi-cylindriques en vis-à-vis (respectivement 63, 64 et 66, 67) de diamètres différents, et les deux surfaces semi-cylindriques (63, 66) de plus grand diamètre sont disposées sur des côtés en vis-à-vis sur la partie (51) formant palier de pivotement.

9. Dispositif de réglage selon l'une des revendications 1 à 8, **caractérisé en ce qu'**il est prévu une aide à la fermeture (36, 37 ; 70, 82) qui, lors de la fermeture du panneau (4), pousse le levier de relevage (6 ; 50) dans sa position fermée abaissée.

10. Dispositif de réglage selon l'une des revendications 1 à 9, **caractérisé en ce que** le levier de relevage (6) ou encore l'aide à la fermeture présente au moins un élément de fermeture (13, 16 ; 80) qui est déplacé dans une position fermée sur une voie de guidage (36, 37 ; 82) lors de la fermeture du panneau (4), sachant que la partie (14 ; 51) formant palier de pivotement peut être coulissée dans une partie (27 ; 56, 57, 58) de voie de compensation de la glissière longitudinale de toit (7) ou encore des coulisses.

11. Dispositif de réglage selon l'une des revendications 3 à 10, **caractérisé en ce qu'**une coulisse (22) de la glissière longitudinale de toit (7) pour la partie (14) formant palier de pivotement reçoit la partie de commande (16) - distante de la partie (14) formant palier de pivotement- du levier de relevage (6) lors du relevage par pivotement de ce dernier et la guide lors du coulissement.

12. Dispositif de réglage selon l'une des revendications 1 à 11, **caractérisé en ce que** le levier de relevage (6 ; 50) peut être pivoté, entre la position fermée et la position relevée par pivotement, de plus d'environ 90° et en particulier d'environ 115°
